# FASCICULE DE BREVET EUROPEEN

(11) **EP 3 165 083 B1**
(45) Date de publication et mention de la délivrance du brevet: **24.07.2019**
(21) Numéro de dépôt: 15193654.9
(22) Date de dépôt: 09.11.2015
(51) Int. Cl.: A01K 13/00

(54) **COUVERTURE POUR ANIMAL**
ABDECKUNG FÜR TIER
COVER FOR ANIMAL

(43) Date de publication de la demande: 10.05.2017
(73) Titulaire: Duquesne Zahid, Déborah, 1212 Grand-Lancy, Genève (CH)
(72) Inventeur: Duquesne Zahid, Déborah, 1212 Grand-Lancy, Genève (CH)
(74) Mandataire: Moinas & Savoye SARL

(56) Documents cités:
- EP-A1- 2 904 898
- WO-A1-91/18542
- CA-A1- 2 484 576
- DE-U1-202006 009 441
- DE-U1-202009 015 782
- GB-A- 2 174 728

## Description

La présente invention concerne une couverture pour animal tel qu'un cheval.

L'invention concerne aussi un procédé de fabrication d'une telle couverture ainsi qu'un procédé d'utilisation de cette couverture.

On connait dans l'état de l'art, différentes couvertures pour animaux en particulier dans le domaine de l'équitation. En effet, dans ce domaine de telles couvertures sont généralement disposées sur le corps du cheval à l'exception de ses membres et sa tête de manière à le protéger par exemple du froid notamment lorsqu'il est situé dans un box, un pré ou encore lors de transports.

Toutefois, de telles couvertures ont pour inconvénient majeur de ne pas assurer une protection efficace de l'ensemble de ce corps du cheval. En effet, il est courant qu'avec de telles couvertures, lorsque le cheval effectue un mouvement ou encore réalise un déplacement, des pressions sont exercées au niveau de parties corporelles qui peuvent dès lors subir des dommages importants. Effectivement, lorsque le cheval réalise par exemple un mouvement d'encolure descendant, généralement 75% du temps, ces couvertures exercent des pressions de l'ordre de 3 kg/cm2, au niveau du garrot du cheval qui engendrent un gonflement de l'épaule et de fortes tensions entre le garrot et les épaules de ce dernier. De telles pressions entraînent souvent des blessures, cicatrices et une circulation du sang qui est altérée du fait notamment que le garrot soit comprimé par la couverture tendue entre le poitrail et le garrot de ce cheval. Parmi les couvertures de l'état de la technique, on peut mentionner celles divulguées dans les documents CA2484576A1, DE202006009441 U1, EP2904898A1, WO91/18542A1, GB2174728A et DE202009015782U1.

La présente invention vise à pallier ces inconvénients liés aux couvertures de l'état de la technique notamment en protégeant efficacement une partie corporelle du cheval pouvant comprendre le poitrail, le garrot et les épaules de ce dernier.

Dans ce dessein, l'invention concerne une couverture pour animal selon la revendication 1, notamment un cheval, apte à recouvrir un corps dudit animal et comprenant une enveloppe située au niveau d'une partie corporelle à protéger, notamment comprenant un garrot et les épaules dudit animal, ladite enveloppe comportant un élément structurel en mousse.

Dans certains modes de réalisation :
- l'élément structurel en mousse comprend une pluralité de canaux susceptibles de relier des faces supérieure et inférieure dudit élément structurel entre elles ;
- des canaux sont répartis de manière homogène dans une épaisseur de cet élément structurel en mousse ;
- l'enveloppe comprend des première et deuxième composantes formant un logement dans lequel l'élément structurel en mousse est susceptible d'être positionné ;
- la couverture comprend une housse maillée dans laquelle est inséré l'élément structurel en mousse avant d'être agencé dans un logement de ladite enveloppe ;
- ladite enveloppe comprend une ouverture pourvue d'un mécanisme de fermeture/ouverture d'un logement de ladite enveloppe ;
- un logement de ladite enveloppe a une forme complémentaire à celle dudit élément structurel en mousse ;
- des première et deuxième composantes de ladite enveloppe sont reliées entre elles de manière amovible ;
- l'élément structurel en mousse comprend une face supérieure sensiblement plane;
- l'élément structurel en mousse comprend une face supérieure sensiblement plane et une face inférieure ondulée comprenant au moins deux sommets d'ondulation ;
- des première et deuxième composantes sont réalisées dans des matières non-extensibles ;
- l'élément structurel en mousse a une forme générale triangulaire, et
- l'enveloppe comprend une ouverture définie sur une face externe de la couverture.

L'invention concerne également un procédé de fabrication d'une telle couverture pour animal selon la revendication 12, notamment un cheval, comprenant une étape d'agencement d'un élément structurel en mousse dans une enveloppe comprise dans ladite couverture.

Avantageusement, le procédé comprend une étape d'assemblage d'une première composante avec une deuxième composante de ladite enveloppe de sorte à définir un logement dans lequel l'élément structurel en mousse est agencé.

L'invention concerne aussi un procédé d'utilisation de ladite couverture pour animal selon la revendication 14, notamment un cheval, comprenant une étape de mise en place de la couverture sur un corps de l'animal, l'étape de mise en place comprenant une étape de positionnement d'une enveloppe de la couverture sur une partie corporelle à protéger notamment comprenant un garrot et les épaules dudit animal.

En particulier, le procédé d'utilisation comprend une étape de verrouillage de ladite couverture sur ledit corps à partir d'au moins un des premier et deuxième éléments de fixation.

D'autres avantages et caractéristiques de l'invention apparaîtront mieux à la lecture de la description du mode de réalisation préféré qui va suivre, en référence aux figures, réalisé à titre d'exemple indicatif et non limitatif :
- la figure 1 représente une vue de profil d'une couverture pour animal selon le mode de réalisation de l'invention ;
- la figure 2 représente une vue de profil d'une variante de la couverture selon le mode de réalisation de l'invention ;
- la figure 3 représente une vue de dessus de la couverture selon le mode de réalisation de l'invention ;
- la figure 4 est une vue de face de la couverture selon le mode de réalisation de l'invention ;
- les figures 5 et 6 sont des vues à plus grande échelle d'une enveloppe de la couverture selon le mode de réalisation de l'invention ;
- la figure 7 est une vue de dessus d'un élément structurel en mousse compris dans la couverture selon le mode de réalisation de l'invention ;
- la figure 8 est une vue en coupe d'une variante de l'élément structurel en mousse compris dans la couverture selon le mode de réalisation de l'invention ;
- la figure 9 est un logigramme relatif à un procédé de fabrication de la couverture selon le mode de réalisation de l'invention, et
- la figure 10 est un logigramme relatif à un procédé d'utilisation de la couverture selon le mode de réalisation de l'invention.

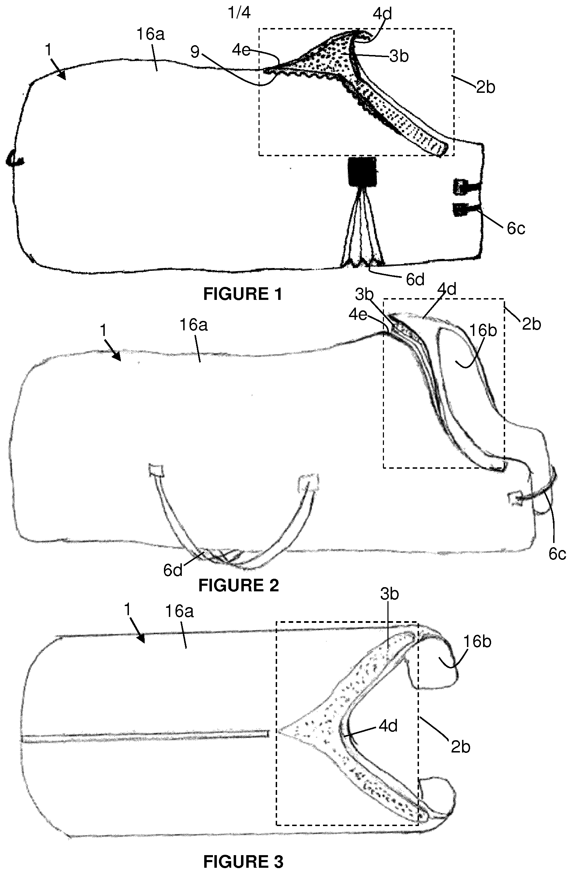

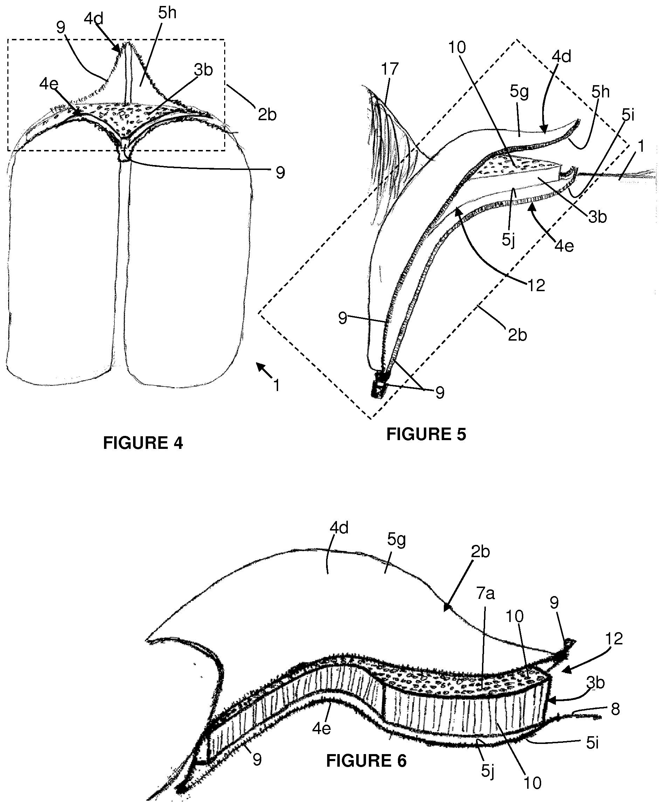

Sur les figures 1 à 10 est représenté un mode de réalisation d'une couverture 1 pour un être vivant tel qu'un équidé. Dans le contexte de l'invention, cet être vivant peut être un être humain ou encore un animal par exemple de type quadrupède.

Dans la présente description et pour une meilleure compréhension de l'invention, ce mode de réalisation de la couverture 1 est mis en oeuvre de manière non limitative pour un animal tel qu'un cheval 17.

Cette couverture 1 comprend une enveloppe 2b, un élément structurel en mousse 3b ainsi qu'au moins des premier et deuxième éléments de fixation 6c, 6d. L'élément structurel en mousse 3b est agencé dans l'enveloppe 2b et ce, de préférence de manière amovible notamment pour assurer l'entretien de la couverture 1 sans détériorer l'élément structurel 3b et/ou l'entretien de cet élément structurel 3b.

La couverture 1 peut comprendre aussi une housse maillée (non représentée) encore appelée filet maillé, dans laquelle est inséré l'élément structurel en mousse 3b avant d'être agencé dans cette enveloppe 2b. Une telle house permet ainsi de pouvoir manipuler plus facilement cet élément structurel en mousse 3b sans l'endommager lors de son insertion/extraction de l'enveloppe 2b.

Cette couverture 1 est disposée sur le corps du cheval 17 en s'étendant notamment de la nuque à la croupe de ce dernier. Une telle couverture 1 peut être une couverture 1 de box ou d'extérieure, ou encore une couverture d'extérieur ou de prairie. Lorsque cette couverture 1 est disposée sur le corps du cheval 17, l'enveloppe 2b est agencée sur une partie corporelle à protéger du cheval 17 comprenant les épaules et le garrot ou les épaules, le garrot et le poitrail de ce dernier, en la recouvrant. L'enveloppe 2b étant ainsi disposée sur cette partie corporelle, contribue à limiter voire éviter que la couverture 1 se déplace relativement au corps du cheval 17 et donc relativement à la partie corporelle. Une telle couverture 1 permet ainsi de protéger le corps du cheval 17 du froid ou des intempéries sans occasionner de frottements dommageables au niveau des épaules et du garrot du cheval 17 qui pourraient provoquer par exemple une usure au garrot ou du poil des épaules, et/ou des crains abimés/coupés.

La couverture 1 peut être monobloc c'est-à-dire qu'elle forme avec l'enveloppe 2b qu'une seule et même pièce. Alternativement, l'enveloppe 2b peut être une pièce rapportée à ladite couverture 1. Dans cette configuration, l'enveloppe 2b peut être fixée à cette couverture 1 par collage, couture ou encore à partir d'au moins un élément de fixation amovible du type comprenant par exemple au moins une bande à accroches du type velcroTM, au moins un bouton-pression, au moins un élément de clipage, au moins une fermeture éclair ou à glissière, au moins un aimant ou une combinaison d'au moins deux de ces éléments.

Sur les figures 1 à 6, l'enveloppe 2b comprend des première et deuxième composantes 4d, 4e qui sont reliées l'une à l'autre de sorte à former un logement de forme complémentaire à celle de l'élément structurel en mousse 3b. Les première et deuxième composantes 4d, 4e, de l'enveloppe 2b comprennent chacune des faces extérieure et intérieure 5g, 5h, 5i, 5j. Les faces intérieures 5h, 5j de ces deux composantes 4d, 4e forment une paroi interne du logement et sont en tout ou partie en contact avec des faces supérieure et inférieure 7a, 7b de l'élément structurel en mousse 3b. La face extérieure 5i de la deuxième composante 4e est définie pour être en contact la partie corporelle à protéger du cheval 17 au niveau de laquelle est disposée l'enveloppe 2b. Dans ce mode de réalisation, la face extérieure 5i est en contact avec cette partie corporelle.

Les première et deuxième composantes 4d, 4e, de cette enveloppe 2b de la couverture 1 peuvent être réalisées de manière non exclusive, en de mêmes matières et/ou en des matières similaires à celles constituant la couverture 1. Ces première et deuxième composante 4d, 4e peuvent être des tissus de préférence non-extensibles comprenant par exemple des matières du type : éponge, micro fleece, polaire fleece, coton, polyester, micro polaire, polaire, laine, filet polyester, polyuréthane, polypropylène, velours, polyamide, élasthanne, jersey, polylaine, Gore-tex™ ou encore une combinaison d'au moins deux de ces matières entre elles.

Dans ce mode de réalisation, la couverture 1 comprend une face externe 16a dans laquelle est comprise la face extérieure 5g de la première composante 4d de l'enveloppe 2b, et une face interne 16b en contact avec la peau et/ou le pelage du cheval 17 comprenant la face extérieure 5i de la deuxième composante 4e de l'enveloppe 2b. Ainsi que nous l'avons déjà évoqué, la face extérieure 5i de cette deuxième composante 4e est en particulier en contact avec la partie corporelle à protéger du cheval 17 comprenant notamment les épaules et le garrot.

Sur les figures 1 à 6, le logement peut comprendre une ouverture 12, au travers de laquelle l'élément structurel en mousse 3b est inséré afin d'être agencé dans ce logement. Cette ouverture 12 comporte des bordures pourvues d'un mécanisme de fermeture/ouverture 9 du logement permettant ainsi de pouvoir insérer/extraire l'élément structurel en mousse 3b du logement formé par les faces intérieures 5h, 5j des première et deuxième composantes 4d, 4e de cette enveloppe 2b. Dans ce mode de réalisation, l'élément structurel en mousse 3b est dit amovible ou extractible. Cette ouverture 12 est située sur la face externe 16a de la couverture 1 et assure une séparation/jonction réversible d'une partie des bords des première et deuxième composantes 4d, 4e entre eux. Cette ouverture 12 s'étant d'une première extrémité située au niveau d'une zone basse avant d'une première épaule vers une deuxième extrémité localisée au niveau d'une zone basse avant d'une deuxième épaule en traversant une zone arrière et/ou avant du garrot. Dans ce mode de réalisation, le mécanisme de fermeture/d'ouverture 9 du logement de cette enveloppe 2b comprend de préférence au moins une fermeture éclair ou à glissière. Plus précisément, dans une première alternative lorsque ce mécanisme 9 comprend une seule fermeture éclair cette dernière est apte à effectuer un déplacement allant de la première à la deuxième extrémité de cette ouverture 12. Dans une deuxième alternative, lorsque le mécanisme 9 comprend par exemple deux fermetures éclair, chacune d'entre elles peut se déplacer de la zone arrière ou avant du garrot vers respectivement la première et la deuxième extrémité afin d'assurer la fermeture de l'ouverture 12. On comprend bien ici que pour réaliser l'ouverture 12 de ce logement de l'enveloppe 2b chaque fermeture éclair doit être déplacée dans le sens inverse de celui de la fermeture. Ainsi dans ces différentes configurations, l'ouverture 12 peut être orientée vers l'avant ou l'arrière du cheval 17. De plus, ce mécanisme 9 peut comprendre au moins une bande à accroches du type velcroTM permettant de verrouiller chaque fermeture éclair lorsque l'ouverture est fermée.

De manière alternative, ce mécanisme de fermeture/d'ouverture 9 du logement peut comprendre des éléments tels qu'au moins un bouton-pression, au moins un élément de clipage, au moins un aimant, au moins une bande à accroches du type velcro™ ou encore une combinaison d'au moins deux de ces éléments entre eux.

Dans ces conditions, les première et deuxième composantes 4d, 4e de ladite enveloppe 2b sont ainsi reliées en tout ou partie entre elles de manière amovible.

Le logement de cette enveloppe 2b a une forme qui est complémentaire à celle de l'élément structurel en mousse 3b qu'il est apte à recevoir. Dans ce mode de réalisation de la couverture 1, lorsque l'élément structurel en mousse 3b est agencé dans le logement, la face supérieure 7a de ce dernier est positionnée en regard voire en contact (par l'intermédiaire de la housse le cas échéant) avec la face intérieure 5h de la première composante 4d et la face inférieure 7b avec la face intérieure 5j de la deuxième composante 4e.

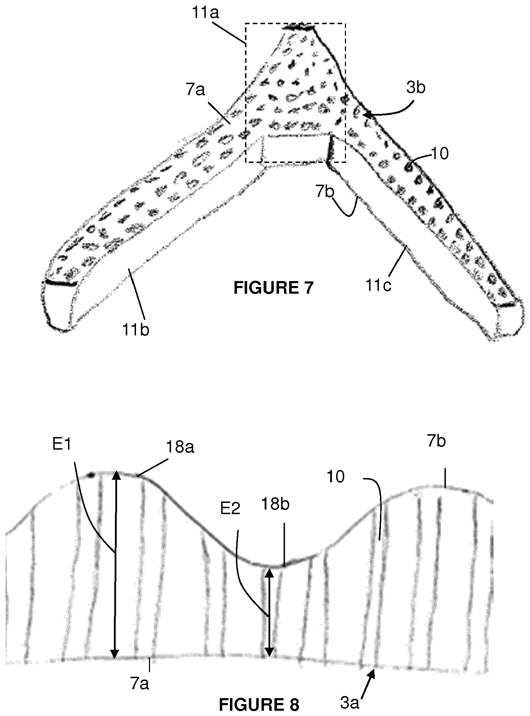

Sur la figure 7, la face supérieure 7a de l'élément structurel en mousse 3b est de préférence plane. Cet élément structurel 3b a une forme essentiellement triangulaire ou encore celle de la lettre « V » inversée. Cet élément 3b comprend une première partie 11a, et des deuxième et troisième parties 11b, 11c correspondant chacun à des bras. Lorsque la couverture 1 est mise en place sur le corps du cheval 17 et que l'enveloppe 2b recouvre la partie corporelle à protéger, la première partie 11a est disposée au-dessus du garrot du cheval 17 et les première et deuxième parties 11b, 11c qui sont sensiblement de même dimension sont situées au niveau des épaules de ce cheval 17 en entourant partiellement le poitrail de ce dernier. Ces première, deuxième et troisième parties 11a à 11c sont en contact avec la partie corporelle du cheval 17 à protéger par l'intermédiaire de la housse et/ou de la deuxième composante de l'enveloppe 2b. Ainsi, l'enveloppe 2b en comprenant cet élément structurel 3b s'étend de l'arrière du garrot en direction du poitrail en descendant le long des épaules du cheval 17.

L'élément structurel en mousse 3b est une mousse dite « perforée » car elle comprend une pluralité de canaux 10 reliant les faces supérieure et inférieure 7a, 7b entre elles en traversant l'épaisseur E1, E2 de cet élément structurel 3b. On notera que tous les canaux 10 peuvent ainsi déboucher au niveau de ces faces supérieure et inférieure 7a, 7b, ou seulement une partie d'entre eux.

Chaque canal 10 a de préférence une section de forme circulaire ayant un diamètre compris entre 3500 et 4500 µm, et qui est de préférence de 4000 µm. Les canaux 10 peuvent être distribués de manière homogène dans cet élément structurel en mousse 3b. Dans cette configuration, le centre de chaque canal 10 est espacé du centre d'un autre canal 10 situé dans sa proximité immédiate, d'une distance comprise entre 7500 et 11500 µm, et de préférence de 10000 µm. Avantageusement, ces canaux 10 favorisent la ventilation de l'élément structurel, 3b et l'évacuation de la chaleur et de la transpiration pouvant provenir du corps du cheval 17 et en particulier de la partie corporelle à protéger. De plus, ces canaux 10 participent à réduire le poids de cet élément structurel 3b.

L'élément structurel en mousse 3b est de préférence réalisé en latex synthétique ou en latex naturel ou encore à partir d'un mélange de ces deux types de latex. Cet élément structurel en mouse 3b est sans odeur et possède des caractéristiques d'élasticité qui lui confèrent une grande durabilité dans le temps ainsi que des propriétés hypoallergéniques et/ou anti-bactériennes.

On notera qu'un tel élément structurel en mousse 3b peut être réalisé selon des procédés de fabrication connus dans l'état de l'art tels que le « procédé Talalay™ » ou encore le « procédé Dunlop™ ». Il peut alternativement être réalisé à partir de la combinaison d'une ou de plusieurs étapes émanant de ces deux procédés.

Cet élément structurel en mousse 3b peut alternativement être réalisé en des matières de type : polyester, polymère, polyuréthane, coton, matériau à mémoire de forme ou encore une combinaison d'au moins deux de ces matières entre elles.

On notera que la face inférieure 7b de l'élément structurel en mousse 3b a une forme ondulée et comprend au moins deux sommets 18a d'ondulation s'étendant sur tout ou partie de la largeur de cet élément structurel 3b (figure 8). Ces ondulations sont parallèles entre elles. Ces deux sommets 18a d'ondulation forment entre eux une cavité 18b d'ondulation qui est définie de manière à recouvrir en tout ou partie la partie corporelle à protéger comprenant le garrot et les épaules. La face supérieure 7a de cet élément structurel en mousse 3b est de préférence plane et comporte comme d'ailleurs la face inférieure 7b, des orifices relatifs aux canaux 10 traversant l'épaisseur E1, E2 de cet élément structurel 3b. Dans la mesure, où cet élément structurel en mousse 3b comprend plusieurs sommets 18a d'ondulations, ceux-ci sont distribués sur toute la longueur de cet élément 3b.

Ainsi que nous l'avons vu précédemment, la couverture 1 comprend également des premier et deuxième éléments de fixation 6c, 6d comprenant des sangles qui sont aptes à assurer un maintien de la couverture 1 sur le corps du cheval 17 et donc sur la partie corporelle du cheval 17 à protéger. Chaque premier élément de fixation 6c est situé devant le poitrail du cheval 17 et chaque deuxième élément de fixation 6d est localisé sous le ventre de ce dernier.

Dans ce mode de réalisation, l'élément structurel en mousse 3b compris dans l'enveloppe 2b positionnée au niveau de la partie corporelle à protéger, est apte à se déformer en se comprimant lorsque le cheval 17 se déplace ou effectue des mouvements de la tête et participe à éviter que la couverture 1 réalise un déplacement relativement au corps du cheval 17. Ainsi, la couverture 1 permet d'éviter qu'une pression ne puisse être exercée au niveau du garrot et des épaules du cheval 17 qui serait à l'origine de blessures, de cicatrices, ou encore de dommages sur sa peau ou son pelage et également de perturbations de la circulation sanguine et/ou neurologiques au niveau notamment de cette partie corporelle. Une telle couverture 1 revêt également des propriétés orthopédiques en assurant alors au cheval 17 un confort, une bonne circulation sanguine et une bonne activité neurologique. Cette couverture 1 peut également procurer au cheval 17 un effet massant au niveau de cette partie corporelle notamment au niveau de ses épaules qui sont en contact avec l'enveloppe 2b lorsque le cheval 17 se déplace. Cet effet massant peut contribuer à soigner des blessures et/ou à améliorer le flux sanguin et les influx nerveux du cheval 17.

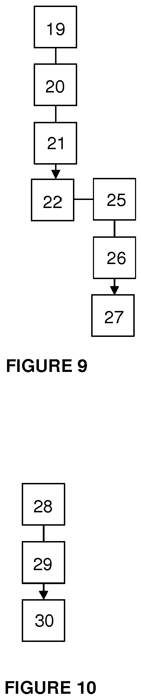

Un aspect de l'invention concerne un procédé de fabrication de cette couverture 1 pour animal tel que le cheval 17 représentée sur la figure 9. Ce procédé comprend une étape de réalisation 19 de l'enveloppe 2b comportant une étape d'assemblage 20 de la première composante 4d avec la deuxième composante 4e de sorte à définir le logement dans lequel l'élément structurel en mousse 3b est positionné.

Par la suite, le procédé comprend une étape d'agencement 22 de cet élément structurel en mousse 3b dans l'enveloppe 2b de la couverture 1. Ce procédé peut prévoir une étape d'insertion 21 de l'élément structurel en mousse 3b dans la housse maillée avant la réalisation de l'étape d'agencement 22.

Le procédé prévoit également une étape de réalisation 25 de l'enveloppe 2b notamment par la mise en oeuvre d'une étape de définition 26 de ladite enveloppe 2b dans la couverture 1 de sorte que les première et deuxième composantes 4d, 4e, sont comprises respectivement dans les surfaces externe et interne 16a, 16b de la couverture 1. Dans cette configuration, le procédé comprend une étape de définition 27 de l'ouverture pourvue du mécanisme d'ouverture/fermeture 9 dans la face externe 16a de la couverture 1.

Un autre aspect de l'invention concerne un procédé d'utilisation de la couverture 1 pour un animal tel que le cheval 17 représenté sur la figure 10.

Ce procédé comprend une étape de mise en place 28 de la couverture 1 sur le corps du cheval 17 et en particulier sur la partie corporelle à protéger comprenant le garrot et les épaules du cheval 17. Cette étape de mise en place 28 comprend en particulier une étape de positionnement 29 de l'enveloppe 2b sur au moins une partie corporelle à protéger du cheval 17. Plus précisément, lors de l'étape de positionnement 29, la face extérieure 5i de la deuxième composante 4e est positionnée en contact avec la partie corporelle à protéger. Par la suite, ce procédé prévoit une étape de verrouillage 30 de la couverture 1 sur le corps du cheval 17 et donc sur la partie corporelle à partir de chaque premier et deuxième élément de fixation 6c, 6d. Lors de cette étape de verrouillage 30, l'élément structurel en mousse 3b peut être partiellement voire totalement comprimé.

La présente invention n'est pas limitée au mode de réalisation qui a été explicitement décrit, mais elle en inclut les diverses variantes et généralisations contenues dans le domaine des revendications ci-après.

## Revendications

1. Couverture (1) pour animal, notamment un cheval (17), apte à recouvrir un corps dudit animal et comprenant une enveloppe (2b) située au niveau d'une partie corporelle à protéger, comprenant un garrot et les épaules dudit animal, ladite enveloppe (2b) comportant un élément structurel en mousse (3b), l'élément structurel en mousse (3b) comprenant une pluralité de canaux (10) reliant des faces supérieure et inférieure (7a, 7b) dudit élément structurel (3b) entre elles, ces canaux (10) étant répartis de manière homogène dans une épaisseur (E1, E2) de cet élément structurel en mousse (3b) et traversant l'épaisseur (E1, E2) de cet élément structurel, **caractérisée en ce que** la face inférieure de l'élément structurel en mousse (3b) a une forme ondulée et comprend au moins deux sommets (18a) d'ondulation s'étendant sur tout ou partie de sa largeur, les ondulations étant parallèles entre elles, et **en ce que** les au moins deux sommets (18a) d'ondulation forment entre eux une cavité (18b) d'ondulation qui est définie de manière à recouvrir la partie corporelle à protéger comprenant le garrot et les épaules.

2. Couverture (1) selon la revendication précédente, **caractérisée en ce que** chaque canal (10) a une section de forme circulaire ayant un diamètre compris entre 3500 et 4500 µm, et **en ce que** le centre de chaque canal (10) est espacé du centre d'un autre canal (10) situé dans sa proximité immédiate, d'une distance comprise entre 7500 et 11500 µm.

3. Couverture (1) selon l'une des revendications précédentes, **caractérisée en ce qu'**elle comprend une face externe (16a) dans laquelle est comprise une face extérieure (5g) d'une première composante (4d) de l'enveloppe (2b), et une face interne (16b) en contact avec la peau et/ou le pelage du cheval (17) comprenant une face extérieure (5i) d'une deuxième composante (4e) de l'enveloppe (2b), de sorte que la face extérieure (5i) de cette deuxième composante (4e) est en contact avec la partie corporelle à protéger du cheval (17) comprenant notamment les épaules et le garrot.

4. Couverture (1) selon l'une des revendications précédentes, **caractérisé en ce que** l'enveloppe (2b) comprend des première et deuxième composantes (4d, 4e) formant un logement dans lequel l'élément structurel en mousse (3b) est susceptible d'être positionné.

5. Couverture (1) selon l'une quelconque des revendications précédentes, **caractérisé en ce qu'**il comprend une housse maillée dans laquelle est inséré l'élément structurel en mousse (3b) avant d'être agencé dans un logement de ladite enveloppe (2b).

6. Couverture (1) selon l'une quelconque des revendications précédentes, **caractérisé en ce que** ladite enveloppe (2b) comprend une ouverture (12) pourvue d'un mécanisme de fermeture/ouverture (9) d'un logement de ladite enveloppe (2b).

7. Couverture (1) selon l'une quelconque des revendications précédentes, **caractérisé en ce qu'**un logement de ladite enveloppe (2b) a une forme complémentaire à celle dudit élément structurel en mousse (3b).

8. Couverture (1) selon l'une quelconque des revendications précédentes, **caractérisé en ce que** des première et deuxième composantes (4d, 4e) de ladite enveloppe (2b) sont reliées entre elles de manière amovible.

9. Couverture (1) selon l'une quelconque des revendications précédentes, **caractérisé en ce que** l'élément structurel en mousse (3b) comprend une face supérieure (7a) sensiblement plane.

10. Couverture (1) selon l'une quelconque des revendications précédentes, **caractérisé en ce que** :
- des première et deuxième composantes (4d, 4e) sont réalisées dans des matières non-extensibles, et/ou
- l'élément structurel en mousse (3b) a une forme générale triangulaire.

11. Couverture (1) selon l'une quelconque des revendications précédentes, **caractérisé en ce que** l'enveloppe (2b) comprend une ouverture (12) définie sur une face externe (16a) de la couverture (1).

12. Procédé de fabrication d'une couverture (1) pour animal, notamment un cheval (17), selon l'une quelconque des revendications précédentes comprenant une étape d'agencement (22) d'un élément structurel en mousse (3b) dans une enveloppe (2b) comprise dans ladite couverture (1).

13. Procédé selon la revendication précédente, **caractérisé en ce qu'**il comprend une étape d'assemblage (20) d'une première composante (4d) avec une deuxième composante (4e) de ladite enveloppe (2b) de sorte à définir un logement dans lequel l'élément structurel en mousse (3b) est agencé.

14. Procédé d'utilisation d'une couverture (1) pour animal, notamment un cheval (17), selon l'une quelconque des revendications 1 à 11 comprenant une étape de mise en place (28) de la couverture (1) sur un corps de l'animal, l'étape de mise en place (28) comprenant une étape de positionnement (29) d'une enveloppe (2b) de la couverture (1) sur une partie corporelle à protéger notamment comprenant un garrot et les épaules dudit animal.

15. Procédé d'utilisation selon la revendication précédente, **caractérisé en ce qu'**il comprend une étape de verrouillage (30) de ladite couverture (1) sur ledit corps à partir d'au moins un des premier et deuxième éléments de fixation (6c, 6d).

## Patentansprüche

1. Decke (1) für ein Tier, insbesondere ein Pferd (17), die dazu geeignet ist, den Körper des genannten Tieres zu bedecken und die eine in Höhe eines zu schützenden Körperbereiches, umfassend den Widerrist und die Schultern des genannten Tieres, angeordnete Hülle (2b) aufweist, wobei die genannte Hülle (2b) ein Strukturelement aus Schaumstoff (3b) umfasst, wobei das Strukturelement aus Schaumstoff (3b) eine Vielzahl Kanäle (10) umfasst, die Ober- und Unterseiten (7a, 7b) des genannten Strukturelements (3b) miteinander verbinden, wobei diese Kanäle (10) gleichmäßig in einer Schicht (E1, E2) dieses Strukturelements aus Schaumstoff (3b) verteilt sind und die Schicht (E1, E2) dieses Strukturelements aus Schaumstoff (3b) durchdringen, **dadurch gekennzeichnet, dass** die Unterseite des Strukturelements aus Schaumstoff (3b) eine gewellte Form aufweist und wenigstens zwei Wellenberge (18a) aufweist, die sich über ihre ganze oder teilweise Breite erstrecken, wobei die Wellen zueinander parallel sind und, dass wenigstens zwei Wellenberge (18a) zwischen sich ein Wellental (18b) bilden, welches so ausgebildet ist, dass es den zu schützenden Körperbereich, umfassend den Widerrist und die Schultern, bedeckt.

2. Decke (1) gemäß dem vorangehenden Anspruch, **dadurch gekennzeichnet, dass** jeder Kanal (10) einen kreisförmigen Querschnitt mit einem Durchmesser zwischen 3500 und 4500 µm aufweist und, dass die Mitte eines jeden Kanals von der Mitte eines in seiner unmittelbaren Nähe gelegenen, anderen Kanals (10) einen Abstand zwischen 7500 und 11500 µm aufweist.

3. Decke (1) gemäß einem der vorangehenden Ansprüche, **dadurch gekennzeichnet, dass** sie eine Außenseite (16a) umfasst, in der eine äußere Oberfläche (5g) eines ersten Bestandteils (4d) der Hülle (2b) enthalten ist und eine in Kontakt mit der Haut und/oder dem Fell des Pferdes in Kontakt stehende innere Oberfläche (16b), umfassend eine äußere Oberfläche (5i) eines zweiten Bestandteils (4e) der Hülle (2b), derart, dass die äußere Oberfläche (5i) dieses zweiten Bestandteils (4e) in Kontakt mit dem zu schützenden Körperbereich des Pferdes (17), insbesondere den Schultern und dem Widerrist steht.

4. Decke (1) gemäß einem der vorangehenden Ansprüche, **dadurch gekennzeichnet, dass** die Hülle (2b) erste und zweite Bestandteile (4d, 4e) umfasst, die eine Aufnahme bilden, in die das Strukturelement aus Schaumstoff (3b) eingelegt werden kann.

5. Decke (1) gemäß einem der vorangehenden Ansprüche, **dadurch gekennzeichnet, dass** sie einen netzartigen Überzug umfasst, in welchen das Strukturelement aus Schaumstoff (3b) eingeschoben wird, bevor es in einer Aufnahme der genannten Hülle (2b) angeordnet wird.

6. Decke (1) gemäß einem der vorangehenden Ansprüche, **dadurch gekennzeichnet, dass** die genannte Hülle (2b) eine Öffnung (12) umfasst, die mit einem Öffnungs-/Schließmechanismus (9) einer Aufnahme der genannten Hülle (2b) versehen ist.

7. Decke (1) gemäß einem der vorangehenden Ansprüche, **dadurch gekennzeichnet, dass** eine Aufnahme der genannten Hülle (2b) eine komplementäre Form zu der des Strukturelements aus Schaumstoff (3b) aufweist.

8. Decke (1) gemäß einem der vorangehenden Ansprüche, **dadurch gekennzeichnet, dass** erste und zweite Bestandteile (4d, 4e) der genannten Hülle (2b) untereinander abnehmbar verbunden sind.

9. Decke (1) gemäß einem der vorangehenden Ansprüche, **dadurch gekennzeichnet, dass** das Strukturelement aus Schaumstoff (3b) eine im Wesentlichen ebene Oberfläche (7a) aufweist.

10. Decke (1) gemäß einem der vorangehenden Ansprüche, **dadurch gekennzeichnet, dass**
- erste und zweite Bestandteile (4d, 4e) aus nicht dehnbaren Materialien gefertigt sind, und/oder
- das Strukturelement aus Schaumstoff (3b) eine im Allgemeinen dreieckige Form hat.

11. Decke (1) gemäß einem der vorangehenden Ansprüche, **dadurch gekennzeichnet, dass** die Hülle (2b) eine auf einer Außenseite (16a) der Decke (1) angelegte Öffnung (12) aufweist.

12. Herstellungsverfahren für eine Decke (1) für ein Tier, insbesondere für ein Pferd (17) gemäß einem der vorangegangenen Ansprüche, umfassend einen Schritt zur Anordnung (22) eines Strukturelements aus Schaumstoff (3b) in einer Hülle (2b) enthalten in der genannten Decke (1).

13. Verfahren gemäß dem vorangehenden Anspruch, **dadurch gekennzeichnet, dass** es einen Schritt (20) umfasst zum Zusammenfügen eines ersten Bestandteils (4d) mit einem zweiten Bestandteil (4e) der genannten Hülle (2b), derart, dass eine Aufnahme geschaffen wird, in welcher das Strukturelement aus Schaumstoff (3b) angeordnet wird.

14. Verfahren zur Verwendung einer Decke (1) für Tiere, insbesondere für ein Pferd (17), nach einem der Ansprüche 1 bis 11 umfassend einen Schritt zur Anordnung (28) der Decke (1) auf einem Tierkörper, wobei der Schritt zur Anordnung (28) einen Schritt zur Positionierung (29) einer Hülle (2b) der Decke (1) auf einem zu schützenden Körperbereich, insbesondere einem Widerrist und den Schultern des Tieres umfasst.

15. Verfahren zur Verwendung gemäß dem vorangehenden Anspruch, **dadurch gekennzeichnet, dass** es einen Schritt zum Befestigung (30) der genannten Decke (1) auf dem genannten Körper umfasst anhand wenigstens eines ersten und zweiten Befestigungselements (6c, 6d).

## Claims

1. Cover (1) for an animal, in particular a horse (17), suitable for covering a body of said animal and comprising an envelope (2b) located at the level of a body part to be protected, comprising the withers and the shoulders of said animal, said envelope (2b) comprising a structural element (3b) made from foam, the structural element (3b) made from foam comprising a plurality of channels (10) connecting together upper and lower faces (7a, 7b) of said structural element (3b), these channels (10) being uniformly distributed in a thickness (E1, E2) of this structural element (3b) made from foam and traversing the thickness (E1, E2) of this structural element, **characterized in that** the lower face of the structural element (3b) made from foam has a corrugated form and comprises at least two corrugation summits (18a) extending over all or part of the width thereof, the corrugations being parallel to one another, and **in that** the at least two undulation summits (18a) together form an undulation cavity (18b) that is defined such as to cover the body part to be protected comprising the withers and the shoulders.

2. Cover (1) according to the preceding claim, **characterized in that** each channel (10) has a cross section of circular form having a diameter of between 3500 and 4500 µm, and **in that** the centre of each channel (10) is spaced from the centre of another channel (10) located in the immediate vicinity thereof by a distance of between 7500 and 11 500 µm.

3. Cover (1) according to one of the preceding claims, **characterized in that** it comprises an external face (16a) in which is included an exterior face (5g) of a first component (4d) of the envelope (2b) and an internal face (16b) in contact with the skin and/or the coat of the horse (17) comprising an exterior face (5i) of a second component (4e) of the envelope (2b), such that the exterior face (5i) of this second component (4e) is in contact with the body part to be protected of the horse (17) comprising, in particular, the shoulders and the withers.

4. Cover (1) according to one of the preceding claims, **characterized in that** the envelope (2b) comprises first and second components (4d, 4e) forming a housing in which the structural element (3b) made of foam can be positioned.

5. Cover (1) according to any one of the preceding claims, **characterized in that** it comprises a closely-knit cover in which the structural element (3b) made from foam is inserted before being arranged in a housing of said envelope (2b).

6. Cover (1) according to any one of the preceding claims, **characterized in that** said envelope (2b) comprises an opening (12) provided with a close/open mechanism (9) of a housing of said envelope (2b).

7. Cover (1) according to any one of the preceding claims, **characterized in that** a housing of said envelope (2b) has a form that complements that of said structural element (3b) made from foam.

8. Cover (1) according to any one of the preceding claims, **characterized in that** the first and second components (4d, 4e) of said envelope (2b) are connected together in a removable manner.

9. Cover (1) according to any one of the preceding claims, **characterized in that** the structural element (3b) made from foam comprises a substantially planar upper face (7a).

10. Cover (1) according to any one of the preceding claims, **characterized in that**:
- first and second components (4d, 4e) are made in non-stretch materials, and/or
- the structural element (3b) made from foam has a substantially triangular form.

11. Cover (1) according to any one of the preceding claims, **characterized in that** the envelope (2b) comprises an opening (12) defined on an external face (16a) of the cover (1).

12. Method for manufacturing a cover (1) for an animal, in particular a horse (17), according to any one of the preceding claims, comprising a step (22) of arranging a structural element (3b) made of foam in an envelope (2b) included in said cover (1).

13. Method according to the preceding claim, **characterized in that** it comprises a step (20) of assembly of a first component (4d) with a second component (4e) of said envelope (2b) such as to define a housing in which the structural element (3b) made of foam is arranged.

14. Method of use of a cover (1) for an animal, in particular a horse (17), according to any one of Claims 1 to 11, comprising a step (28) of placing the cover (1) on a body of the animal, the placing step (28) comprising a step (29) of positioning an envelope (2b) of the cover (1) on a body part to be protected, in particular comprising the withers and the shoulders of said animal.

15. Method of use according to the preceding claim, **characterized in that** it comprises a step (30) of locking said cover (1) on said body using at least one of the first and second fixing elements (6c, 6d).
